# EUROPEAN PATENT APPLICATION

(11) **EP 4 443 999 A1**
(43) Date of publication of application: **09.10.2024**
(21) Application number: 23739906.8
(22) Date of filing: 06.01.2023
(51) Int. Cl.: H04W 68/02

(54) **PAGING METHOD, ASSOCIATED COMMUNICATION APPARATUS, MEDIUM, AND CHIP**

(30) Priority: 14.01.2022 CN 202210044685
(71) Applicant: Huawei Technologies Co., Ltd., Shenzhen, Guangdong 518129 (CN)
(72) Inventor: XIANG, Hongyu, Shenzhen, Guangdong 518129 (CN); LI, Bingzhao, Shenzhen, Guangdong 518129 (CN); CHEN, Lei, Shenzhen, Guangdong 518129 (CN); LI, Chenwan, Shenzhen, Guangdong 518129 (CN)
(74) Representative: Pfenning, Meinig & Partner mbB
(86) International application number: PCT/CN2023/070903
(87) International publication number: WO 2023/134563

(57) **Abstract**

Embodiments of this disclosure provide a paging method and an associated communication apparatus, medium, and chip. According to embodiments of this disclosure, an access network device sends information including an address of the access network device and an identifier of a terminal device to a core network device. The core network device determines an area for paging based on the address of the access network device, and sends a paging message including the identifier of the terminal device to the access network device. The access network device sends a radio access network paging message to the terminal device. In this manner, the area in which paging needs to be performed by the core network device can be reduced, thereby avoiding a waste of unnecessary paging resources.

## Description

### TECHNICAL FIELD

This disclosure relates to the communication field, and more specifically, to a paging method, and an associated communication apparatus, medium, and chip.

### BACKGROUND

A radio resource control (Radio Resource Control, RRC) connection may be established between a terminal device and an access network device. A status of the RRC connection includes an RRC connected (RRC_CONNECTED) state. When the terminal device is in the RRC_CONNECTED state, the terminal device has established an RRC context, and all parameters required for establishing communication between the terminal device and a network have been known to both communication parties. The RRC context is a key parameter for establishing communication between the terminal device and the network, and specifically includes a security context, user equipment (User Equipment, UE) capability information, and the like. The status of the RRC connection further includes an RRC idle (RRC_IDLE) state. When the terminal device is in the RRC_IDLE state, the terminal device does not reserve the RRC context. Anew RRC status, namely, an RRC inactive (RRC_INACTIVE) state, is introduced in a new radio (New Radio, NR) system. The RRC_INACTIVE state can be converted only from the RRC_CONNECTED state by using an RRC release message. When the terminal device is released from the RRC_CONNECTED state to the RRC_INACTIVE state, a network device allocates an identifier: an inactive radio network temporary identifier (Inactive Radio Network Temporary Identifier, I-RNTI), to the terminal device, and stores a context of UE by using the identifier. The network device is also referred to as a last serving (Last Serving) next generation NodeB (Next Generation NodeB, gNB) of the terminal device, and is sometimes denoted as an anchor gNB (Anchor gNB). When the terminal device requests to resume a previously suspended RRC connection or perform radio access network-based notification area (Radio Access Network (RAN) Notification Area, RNA) update, the terminal device sends a message to the current network device. The terminal device may also establish a signaling connection to a core network device. For example, the terminal device may establish a signaling connection to an access and mobility management function (Access and Mobility Management Function, AMF) entity. A status of the connection between the terminal device and the AMF may be referred to as a connection management (Connection Management, CM) status. The CM status may include a CM connected (CM CONNECTED) state and a CM idle (CM_IDLE) state. According to a conventional technical solution, when the terminal device is in the RRC_INACTIVE state and the RRC_CONNECTED state, the CM status between the terminal device and the AMF is the CM_CONNECTED state. When the terminal device is in the RRC_IDLE state, the CM status between the terminal device and the AMF is the CM_IDLE state.

In addition, to save power of the terminal device, a discontinuous reception (Discontinuous Reception, DRX) mechanism is proposed. In the DRX mechanism, the terminal device may periodically enter a sleep state (sleep mode) at some time, and does not monitor a downlink control channel. When the terminal device needs to monitor the downlink control channel, the terminal device is woken up (wake up) from the sleep state. In this way, power of the terminal device can be saved. However, a transmission failure may occur when the terminal device is in the sleep state. For example, it is assumed that the terminal device is in the CM_CONNECTED state and the RRC_INACTIVE state. In this case, because the terminal device is in the CM_CONNECTED state, after sending data, the core network device needs to start a retransmission timer related to the terminal device. However, because the terminal device is also in the RRC_INACTIVE state, the terminal device enters the sleep state and does not monitor the downlink control channel. As a result, the terminal device cannot monitor the downlink control channel before the retransmission timer expires, and consequently data transmission fails.

### SUMMARY

Example embodiments of this disclosure provide a solution for paging in a communication system.

According to a first aspect of this disclosure, a communication method is provided. The method includes: An access network device sends update information to a core network device, where the update information includes an address of the access network device and an inactive radio network temporary identifier I-RNTI of a terminal device. The method further includes: The access network device receives a paging message corresponding to the terminal device from the core network device. The method further includes: The access network device sends a radio access network paging message to the terminal device, where the radio access network paging message includes the I-RNTI. In other words, the first aspect of this disclosure proposes that the terminal device may be in a CM_IDLE state and an RRC_INACTIVE state. In such states, because the terminal device is in the CM_IDLE state, a retransmission timer of the core network device is not started. Even if the terminal device is in a sleep state and cannot receive data in a timely manner, a data transmission failure is not caused by expiration of the timer. Further, the first aspect of this disclosure proposes a new paging process for the terminal device, so that the terminal device in the CN_IDLE state and the RRC_INACTIVE state can be paged. In the paging process, if the access network device determines that an RRC status of the terminal device needs to be updated, the access network device sends the update information to the core network device, to trigger the core network device to update a CM status of the terminal device. After updating the CM status of the terminal device, the core network device sends the paging message for the terminal device to the access network device based on a correspondence that is between the access network device and the terminal device and that is indicated in the update information. Then, the access network device sends a radio access network paging message to the terminal device, instead of core network paging. Therefore, when the terminal device is in the CM_IDLE state and the RRC_INACTIVE state, the access network device may page the terminal device by using the method provided in this application, to avoid a data transmission failure caused by expiration of the retransmission timer of the core network device. In addition, the core network device may further determine an area for paging based on the address of the access network device, to implement radio access network paging for the terminal device, thereby improving paging efficiency. In this way, the terminal device can quickly access a communication network. It may be understood that the paging process proposed in the first aspect of this disclosure is further applicable to the terminal device in another state, and is not limited to the terminal device in the CM_IDLE state and the RRC INACTIVE state.

In some embodiments, the paging message corresponding to the terminal device includes the I-RNTI. In this manner, the core network device reduces the area for paging based on the address of the access network device, enables the terminal device to start an RRC connection resume process, and retrieves, based on the I-RNTI, a UE context stored in the access network device, so that the terminal device can quickly resume a connection.

In some embodiments, the update information indicates the core network device to update the connection management status of the terminal device. In this manner, the core network device may update the connection management status of the terminal device in a timely manner.

In some embodiments, the method further includes: The access network device sends a radio resource control release message to the terminal device, where the radio resource control release message includes the I-RNTI. In other words, the access network device notifies the terminal device of an identifier allocated by the access network device to the terminal device. In this manner, the terminal device may monitor the paging message corresponding to the terminal device.

In some embodiments, the radio resource control release message further includes at least one of the following: a discontinuous reception cycle (an extended discontinuous reception (extended Discontinuous Reception, eDRX) cycle and/or a DRX cycle), a paging time window (Page Time Window, PTW) length, RNA information, and an RNA update cycle. The discontinuous reception cycle (for example, the eDRX cycle) is greater than a predetermined length. In this manner, the terminal device may enter the CM_IDLE state and the RRC INACTIVE state.

In some embodiments, the address of the access network device is an IP address of the access network device or an address of a radio access network to which the access network device belongs. In this manner, the core network device reduces the area for paging based on the address of the access network device.

According to a second aspect of this disclosure, a communication method is provided. The method includes: An access network device sends update information to a core network device, where the update information includes an address of the access network device. The method further includes: The access network device sends a request for an identifier of a terminal device to the core network device. The method further includes: The access network device receives a response message from the core network device, where the response message includes a temporary mobile subscriber identity (Temporary Mobile Subscriber Identity, TMSI) of the terminal device. The method further includes: The access network device receives a paging message corresponding to the terminal device from the core network device, where the paging message includes the TMSI. The method further includes: The access network device sends a radio access network paging message, where the radio access network paging message includes an inactive radio network temporary identifier I-RNTI of the terminal device. In other words, if the access network device determines that an RRC status of the terminal device needs to be updated, the access network device sends the update information to the core network device, to trigger the core network device to update a CM status of the terminal device. The access network device further requests the identifier of the terminal device from the core network device. The core network device sends the paging message for the terminal device to the access network device based on the update information and the requested identifier of the terminal device. After receiving the paging message from the core network device, the access network device sends the radio access network paging message to the terminal device. Therefore, when the terminal device is in a CM_IDLE state and an RRC_INACTIVE state, the core network device determines an area for paging based on the address of the access network device, to improve paging efficiency, so that the terminal device can quickly access a communication network.

In some embodiments, the method further includes: The access network device determines the I-RNTI based on a first correspondence between the TMSI and the I-RNTI. In some aspects of this disclosure, the paging message corresponding to the terminal device further includes first indication information, and the first indication information indicates the access network device to page the terminal device by using the radio access network paging message. The terminal device determines, based on the first indication information, that radio access network paging needs to be performed on the terminal device, instead of core network paging. In this manner, the core network device reduces the area for paging based on the address of the access network device, enables the UE terminal device to start an RRC connection resume process, and retrieves, based on the I-RNTI, a UE context stored in the access network device, so that the UE can quickly resume a connection.

In some embodiments, the method further includes: The access network device stores the first correspondence. In this manner, the core network device may perform paging in a radio network notification area.

In some embodiments, the update information indicates the core network device to update the connection management status of the terminal device. In this manner, the core network device may update the connection management status of the terminal device in a timely manner.

In some embodiments, the method further includes: The access network device sends a radio resource control release message to the terminal device, where the radio resource control release message includes at least the I-RNTI, a discontinuous reception DRX cycle, an extended discontinuous reception eDRX cycle, a PTW length, RNA information, and an RNA update cycle. The discontinuous reception cycle is greater than a predetermined length. In other words, the access network device notifies the terminal device of an identifier allocated by the access network device to the terminal device. In this manner, the core network device may update the connection management status of the terminal device in a timely manner.

In some embodiments, the address of the access network device is an IP address of the access network device or an address of a radio access network to which the access network device belongs. In this manner, the core network device reduces the area for paging based on the address of the access network device.

According to a third aspect of this disclosure, a communication method is provided. The method includes: A first access network device receives a radio resource control resume request from a terminal device, where the radio resource control resume request includes a first identifier allocated by a second network device to the terminal device. The method further includes: The first access network device sends a retrieve user equipment UE context request message to a second access network device. The method further includes: The first access network device sends update information or release indication information to a core network device, where the update information indicates at least one of the following: an address of the first access network device or a second identifier allocated by the first access network device to the terminal device, and the release indication information indicates to release at least one of the following: an address of the second network device, a TMSI, or the first identifier; or an address of the second network device, and/or an index value corresponding to the first identifier. The method further includes: The first access network device sends a radio resource control release message to the terminal device, where the radio resource control release message includes the second identifier. In other words, when a serving access network device of the terminal device changes from the second access network device to the first access network device, the first access network device notifies the core network device of the update information or resource release based on a related capability of the first access network device. For example, if the first access network device can also support eDRX, the first access network device notifies the core network device to store information about the first access network device for subsequent paging. For example, if the first access network device cannot support eDRX, the first access network device notifies the core network device to delete previous information about the second access network device. Therefore, the core network device can update related information in a timely manner for a subsequent process, for example, a paging process.

In some embodiments, the update information is carried in a path switch request. In this manner, signaling overheads can be saved.

According to a fourth aspect of this disclosure, a communication method is provided. The method includes: A core network device receives update information from an access network device, where the update information includes at least an address of the access network device. The method further includes: The core network device updates a connection management status of a terminal device based on the update information. The method further includes: The core network device sends a paging message corresponding to the terminal device to the access network device based on the address. In other words, the core network device triggers update of the CM status of the terminal device based on the update information from the access network device. After updating the CM status of the terminal device, the core network device sends the paging message for the terminal device to the access network device based on address information, of the access network device, that is included in the update information. In this manner, the core network device reduces an area for paging based on the address of the access network device, to reduce a waste of resources.

In some embodiments, the update information further includes an inactive radio network temporary identifier I-RNTI of the terminal device, and the paging message for the terminal device includes the I-RNTI. In this manner, the core network device reduces the area for paging based on the address of the access network device, enables the terminal device to start an RRC connection resume process, and retrieves, based on the I-RNTI, a UE context stored in the access network device, so that the UE can quickly resume a connection.

In some embodiments, the method further includes: The core network device receives a request for an identifier of the terminal device from the access network device. The method further includes: The core network device sends the paging message for the terminal device to the access network device, where a paging message includes a TMSI, and the paging message for the terminal device includes a temporary mobile subscriber identity TMSI of the terminal device and indication information indicating to perform paging in a radio access network-based notification area. In this manner, the access network device determines, based on the received paging information, to perform radio access network notification paging on the terminal device, to improve paging efficiency.

In some embodiments, the method further includes: the address of the access network device is an IP address of the access network device or an address of a radio access network to which the access network device belongs. In this manner, the core network device reduces the area for paging based on the address of the access network device.

According to a fifth aspect of this disclosure, a communication method is provided. The method includes: A core network device receives update information or release indication information from a first access network device, where the update information indicates at least one of the following: an address of the first access network device or a second identifier allocated by the first access network device to a terminal device, and the release indication information indicates to release at least one of the following: an address of a second network device, a TMSI, or a first identifier; or an address of a second network device, and/or an index value corresponding to a first identifier. The method further includes: The core network device updates a connection management status of the terminal device based on the update information or the release indication information. In this manner, when a serving access network device of the terminal device changes from a second access network device to the first access network device, the core network device notifies the update information or resource release based on a related capability of the first access network device. For example, if the first access network device can also support eDRX, the first access network device notifies the core network device to store information about the first access network device for subsequent paging. For example, if the first access network device cannot support eDRX, the first access network device notifies the core network device to delete previous information about the second access network device. Therefore, the core network device can update related information in a timely manner for a subsequent process, for example, a paging process.

In some embodiments, the update information is carried in a path switch request. In this manner, signaling can be saved.

In some embodiments, the address of the first access network device is an IP address of the first access network device or an address of a radio access network to which the first access network device belongs. In some aspects of this disclosure, the first identifier and the second identifier are inactive radio network temporary identifiers I-RNTIs.

According to a sixth aspect of this disclosure, a communication method is provided. The method includes: A terminal device receives a radio resource control release message from an access network device, where the radio resource control release message includes at least an I-RNTI, a discontinuous reception DRX cycle, an extended discontinuous reception eDRX cycle, a PTW length, RNA information, and an RNA update cycle. A radio resource control status between the terminal device and the access network device is a radio resource control inactive state. A connection management status between the terminal device and a core network device is a connection management idle state. The method further includes: The terminal device receives a radio access network paging message, where the radio access network paging message includes the I-RNTI. In this manner, the terminal device can start an RRC connection resume process, and retrieve, based on the I-RNTI, a UE context stored in the access network device, so that a connection can be quickly resumed.

According to a seventh aspect of this disclosure, a chip is provided. The chip includes a processor, and may further include a memory. The processor is coupled to the memory, and is configured to execute a computer program or instructions stored in the memory, so that the chip implements the method in any possible implementation of the first aspect to the sixth aspect.

According to an eighth aspect of this disclosure, a computer program product is provided. The computer program product is tangibly stored in a computer-readable medium and includes computer-executable instructions; and when the computer-executable instructions are executed, a device is enabled to implement operations of the method in any possible implementation of the first aspect to the sixth aspect.

According to a ninth aspect of this disclosure, a computer-readable storage medium is provided. The computer-readable storage medium stores instructions; and when the instructions are executed by a processor of an apparatus, the apparatus is enabled to implement operations of the method in any possible implementation of the first aspect to the sixth aspect.

According to a tenth aspect of this disclosure, this application further provides a communication apparatus. The communication apparatus may implement the access network device according to any method provided in the first aspect, the second aspect, or the third aspect. The communication apparatus may be, for example, a base station, or a baseband apparatus in the base station. The communication apparatus may be implemented by hardware, or may be implemented by hardware executing corresponding software. The hardware or the software includes one or more units or modules corresponding to the foregoing functions. In a possible implementation, the communication apparatus includes a processor. The processor is configured to support the communication apparatus in performing corresponding functions of the access network device in the foregoing method. Optionally, the communication apparatus may further include a memory. The memory may be coupled to the processor, and store program instructions and data that are necessary for the communication apparatus. Optionally, the communication apparatus further includes an interface circuit, and the interface circuit is configured to support communication between the communication apparatus and a device such as a terminal device or a core network device. In a possible implementation, the communication apparatus includes corresponding functional modules configured to implement the steps in the foregoing method. The functions may be implemented by hardware, or may be implemented by hardware executing corresponding software. The hardware or the software includes one or more modules corresponding to the foregoing functions. For example, the communication apparatus includes a sending unit (also referred to as a sending module sometimes) and a receiving unit (also referred to as a receiving module sometimes). These units may perform corresponding functions in the foregoing method examples. For example, when implementing the method provided in the first aspect, the sending unit is configured to send update information to a core network device, where the update information includes an address of an access network device and an inactive radio network temporary identifier I-RNTI of a terminal device. The receiving unit is configured to receive a paging message corresponding to the terminal device from the core network device. The sending unit is configured to send a radio access network paging message to the terminal device, where the radio access network paging message includes the I-RNTI. For details, refer to the descriptions in the method provided in the first aspect, the second aspect, or the third aspect. Details are not described herein.

According to an eleventh aspect of this disclosure, this application further provides a communication apparatus. The communication apparatus may implement the core network device according to any method provided in the fourth aspect or the fifth aspect. The communication apparatus may be implemented by hardware, or may be implemented by hardware executing corresponding software. The hardware or the software includes one or more units or modules corresponding to the foregoing functions. In a possible implementation, the communication apparatus includes a processor. The processor is configured to support the communication apparatus in performing corresponding functions of the core network device in the foregoing method. Optionally, the communication apparatus may further include a memory. The memory may be coupled to the processor, and store program instructions and data that are necessary for the communication apparatus. Optionally, the communication apparatus further includes an interface circuit, and the interface circuit is configured to support communication between the communication apparatus and a device such as a terminal device or an access network device. In a possible implementation, the communication apparatus includes corresponding functional modules configured to implement the steps in the foregoing method. The functions may be implemented by hardware, or may be implemented by hardware executing corresponding software. The hardware or the software includes one or more modules corresponding to the foregoing functions. For example, the communication apparatus includes a sending unit (also referred to as a sending module sometimes) and a receiving unit (also referred to as a receiving module sometimes). These units may perform corresponding functions in the foregoing method examples. For example, when implementing the method provided in the fourth aspect, the sending unit is configured to send update information to a core network device, where the update information includes an address of an access network device. The sending unit is further configured to send a request for an identifier of a terminal device to the core network device. The receiving unit is configured to receive a response message from the core network device, where the response message includes a temporary mobile subscriber identity TMSI of the terminal device. The receiving unit is configured to receive a paging message corresponding to the terminal device from the core network device, where the paging message includes the TMSI. The sending unit is configured to send a radio access network paging message, where the radio access network paging message includes an inactive radio network temporary identifier I-RNTI of the terminal device. For details, refer to the descriptions in the method provided in the fourth aspect or the fifth aspect. Details are not described herein.

According to a twelfth aspect of this disclosure, a communication apparatus is provided. This application further provides a communication apparatus. The communication apparatus may implement the access network device according to any method provided in the sixth aspect. The communication apparatus may be, for example, a terminal device. The communication apparatus may be implemented by hardware, or may be implemented by hardware executing corresponding software. The hardware or the software includes one or more units or modules corresponding to the foregoing functions. In a possible implementation, the communication apparatus includes a processor. The processor is configured to support the communication apparatus in performing corresponding functions of the terminal device in the foregoing method. Optionally, the communication apparatus may further include a memory. The memory may be coupled to the processor, and store program instructions and data that are necessary for the communication apparatus. Optionally, the communication apparatus further includes an interface circuit, and the interface circuit is configured to support communication between the communication apparatus and a device such as an access network device or a core network device. In a possible implementation, the communication apparatus includes corresponding functional modules configured to implement the steps in the foregoing method. The functions may be implemented by hardware, or may be implemented by hardware executing corresponding software. The hardware or the software includes one or more modules corresponding to the foregoing functions. For example, the communication apparatus includes a sending unit (also referred to as a sending module sometimes) and a receiving unit (also referred to as a receiving module sometimes). These units may perform corresponding functions in the foregoing method example. For example, when implementing the method provided in the sixth aspect, the receiving unit is configured to receive a radio resource control resume request from a terminal device, where the radio resource control resume request includes a first identifier allocated by a second network device to the terminal device. The sending unit is configured to send a retrieve user equipment UE context request message to a second access network device, where the retrieve user equipment UE context request message is used to request a context of the terminal device. The sending unit is configured to send update information or release indication information to a core network device, where the update information indicates at least one of the following: an address of a first access network device or a second identifier allocated by the first access network device to the terminal device, and the release indication information indicates to release at least one of the following: an address of the second network device or the first identifier. The sending unit is configured to send a radio resource control release message to the terminal device, where the radio resource control release message includes the second identifier. For details, refer to the descriptions in the method provided in the sixth aspect. Details are not described herein.

### BRIEF DESCRIPTION OF DRAWINGS

Features, advantages, and other aspects of implementations of this disclosure will become more apparent with reference to accompanying drawings and the following detailed descriptions. Several implementations of this disclosure are shown herein by way of an example rather than a limitation. In the accompanying drawings:
FIG. 1 is a block diagram of a communication system in which an embodiment of this disclosure can be implemented;
FIG. 2 is a diagram of a signaling exchange in a communication process according to some embodiments of this disclosure;
FIG. 3 is a diagram of a signaling exchange in a communication process according to some other embodiments of this disclosure;
FIG. 4A and FIG. 4B are diagrams of a signaling exchange in a communication process according to still some other embodiments of this disclosure;
FIG. 5 is a flowchart implemented at an access network device according to some embodiments of this disclosure;
FIG. 6 is a flowchart implemented at an access network device according to some other embodiments of this disclosure;
FIG. 7 is a flowchart implemented at an access network device according to still some other embodiments of this disclosure;
FIG. 8 is a flowchart implemented at a core network device according to some embodiments of this disclosure;
FIG. 9 is a flowchart implemented at a core network device according to some other embodiments of this disclosure;
FIG. 10 is a flowchart implemented at a terminal device according to some embodiments of this disclosure;
FIG. 11A to FIG. 11F are respectively block diagrams of communication apparatuses according to some embodiments of this disclosure; and
FIG. 12 is a simplified block diagram of an example device suitable for implementing an embodiment of this disclosure.

In the accompanying drawings, identical reference signs represent same elements.

### DESCRIPTION OF EMBODIMENTS

The following describes embodiments of this disclosure in more detail with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "include" and similar terms thereof shall be understood as non-exclusive inclusions, that is, "include but not limited to". The term "based on" should be understood as "at least partially based on". The term "one embodiment" or "this embodiment" should be understood as "at least one embodiment". In embodiments of this application, for a technical feature, "first", "second", and the like are used to distinguish between technical features in this technical feature, and there is no sequence or size sequence between the technical features described by "first" and "second". Other explicit and implicit definitions may also be included below.

Embodiments of this disclosure may be implemented according to any appropriate communication protocol, including but not limited to cellular communication protocols such as fourth generation (Fourth Generation, 4G) and fifth generation (Fifth Generation, 5G), wireless local area network communication protocols such as the Institute of Electrical and Electronics Engineers (Institute of Electrical and Electronics Engineers, IEEE) 802.11, and/or any other protocol currently known or developed in the future. The technical solutions in embodiments of this disclosure are applied to any appropriate communication system, for example, a general packet radio service (General Packet Radio Service, GPRS), a long term evolution (Long Term Evolution, LTE) system, a frequency division duplex (Frequency Division Duplex, FDD) system, a time division duplex (Time Division Duplex, TDD) system, a universal mobile telecommunications system (Universal Mobile Telecommunications Service, UMTS), a narrowband internet of things (Narrowband Internet Of Things, NB-IoT) communication system, or a future fifth generation (5G) system or a new radio (New Radio, NR) system.

For a purpose of illustration, the following describes embodiments of this disclosure in a context of a 3rd generation partnership project (3rd Generation Partnership Project, 3GPP) communication system in 5G. However, it should be understood that embodiments of this disclosure are not limited to being applied to the 3GPP communication system in 5G, but may be applied to any communication system having a similar problem, for example, a wireless local area network (Wireless Local Area Network, WLAN), a wired communication system, or another communication system developed in the future.

The term "terminal device" used in this disclosure is any terminal device that can perform wired or wireless communication with a network device. The terminal device in embodiments of this application may also be referred to as a terminal, and may be a device having a wireless transceiver function. The terminal device may be deployed on land, including an indoor device, an outdoor device, a handheld device, or a vehicle-mounted device; or may be deployed on a water surface (for example, on a ship); or may be deployed in the air (for example, on an airplane, a balloon, and a satellite). The terminal device may be user equipment (User Equipment, UE). The UE includes a handheld device, a vehicle-mounted device, a wearable device, or a computing device that has a wireless communication function. For example, the UE may be a mobile phone (Mobile Phone), a tablet computer, or a computer having a wireless transceiver function. The terminal device may alternatively be a virtual reality (Virtual Reality, VR) terminal device, an augmented reality (Augmented Reality, AR) terminal device, a wireless terminal in industrial control, a wireless terminal in self-driving, a wireless terminal in telemedicine, a wireless terminal in a smart grid, a wireless terminal in a smart city (Smart City), a wireless terminal in a smart home (Smart Home), or the like. In embodiments of this application, an apparatus configured to implement a function of the terminal may be a terminal; or may be an apparatus that can support the terminal in implementing the function, for example, a chip system. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus for implementing a terminal function is a terminal and the terminal is UE.

The term "network device" used in this disclosure is an entity or a node that may be configured to communicate with the terminal device. The network device in embodiments of this application includes an access network device. For example, a base station may be a device that is deployed in a radio access network and that can perform wireless communication with the terminal. The base station may be in a plurality of forms such as a macro base station, a micro base station, a relay station, and an access point. For example, the base station in embodiments of this application may be a base station in 5G or a base station in LTE. The base station in 5G may also be referred to as a transmission reception point (Transmission Reception Point, TRP) or a gNB. In embodiments of this application, an apparatus configured to implement a function of the network device may be a network device, or may be an apparatus that can support the network device in implementing the functions, for example, a chip system. The apparatus may be installed in the network device. In the technical solutions provided in embodiments of this application, the technical solutions provided in embodiments of this application are described by using an example in which the apparatus for implementing the function of the network device is a network device and the network device is a base station.

The term "core network (Core Network, CN) device" used in this disclosure may be that the CN device corresponds to different devices in different systems. For example, in a third generation (Third Generation, 3G) communication system, the CN device may correspond to a serving support node (Serving GPRS Support Node, SGSN) of a general packet radio service (General Packet Radio Service, GPRS) and/or a gateway support node (Gateway GPRS Support Node, GGSN) of the GPRS. In a 4G communication system, the CN device may correspond to a mobility management entity (Mobility Management Entity, MME) and/or a serving gateway (Serving Gateway, S-GW). In a 5G communication system, the CN device may correspond to an access and mobility management function (Access and Mobility Management Function, AMF), a session management function (Session Management Function, SMF), or a user plane function (User plane Function, UPF).

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be briefly referred to as "communication", and the term "communication" may also be described as "data transmission", "information transmission", or "transmission".

As described above, a status of an RRC connection may include an RRC_IDLE state, an RRC_CONNECTED state, and an RRC_INACTIVE state. A CM status may include a CM connected (CM_CONNECTED) state and a CM idle (CM IDLE) state. According to a conventional technical solution, when the terminal device is in the RRC_INACTIVE state and the RRC_CONNECTED state, the CM status between the terminal device and the AMF is the CM_CONNECTED state. When the terminal device is in the RRC_IDLE state, the CM status between the terminal device and the AMF is the CM_IDLE state.

According to a conventional technical solution, when the terminal device is in the RRC_IDLE state (where in this case, the terminal device is in the CM_IDLE state), the terminal device needs to monitor a paging message from a CN. However, when the terminal device is in an RRC INACTIVE state, the terminal device remains in the CM_CONNECTED state, the terminal device may move in a radio access network-based notification area (Radio Access Network (RAN) Notification Area, RNA) without notifying an NG-RAN, and a last gNB that serves the terminal device stores a UE context and an NG connection between a serving AMF and a UPF that are associated with the terminal device. Therefore, from a perspective of the CN, a terminal device in an RRC INACTIVE state is the same as a terminal device in an RRC_CONNECTED state. When there is downlink data from the UPF or downlink signaling from the AMF, the last gNB that serves the terminal device first receives the data or signaling, and pages the terminal device in all cells of the RNA, namely, radio access network (Radio Access Network, RAN) paging. If the cell of the RNA belongs to another gNB, the gNB sends a paging message to a corresponding gNB through an Xn interface.

Regardless of whether the terminal device is in the RRC_IDLE state or the RRC_INACTIVE state, the terminal device needs to monitor a paging message from a network, for example, CN paging and RAN paging. This is because when service data arrives, the terminal device needs to be paged in the network to send the data to the terminal device. To save power consumption, the terminal device performs paging and monitoring in the RRC_IDLE state and the RRC _INACTIVE state through DRX. In each DRX cycle, the terminal device monitors one paging occasion (Paging Occasion, PO). The paging message may be sent by the network to the terminal device on the monitored occasion. The terminal device learns, based on content indicated by DCI, whether the terminal device is paged by monitoring and parsing corresponding paging downlink control information (DCI).

According to a conventional technical solution, when an inactive eDRX cycle is configured to be greater than a predetermined value (for example, 10.24s), because the terminal device and the core network device are still in the CM_CONNECTED state, when the network triggers a non-access stratum (Non-access Stratum, NAS) procedure, the AMF starts a NAS retransmission timer, and sends a NAS packet to an anchor gNB through an N2 interface. However, because the terminal device may be in a sleep state, the AMF cannot send a message to the terminal device temporarily. However, because the eDRX cycle is greater than the predetermined value, message sending may not be completed for a long time. Consequently, the NAS retransmission timer expires, and the NAS procedure fails. A conventional method includes: prolonging the NAS retransmission timer. However, there are disadvantages such as prolonging time consumed by the NAS procedure. Therefore, the CM_IDLE state and (with) the RRC_INACTIVE state may be introduced, so that the terminal device is in the CM-IDLE state. In this case, the core network does not need to provide a related service in the CM-CONNECTED state, but the terminal device is still in the RRC_INACTIVE state. The anchor gNB stores the UE context, so that the terminal device can quickly return to the RRC_CONNECTED state.

As described above, the paging message from the network includes CN paging and RAN paging. In a CN paging process, the core network device sends a paging message to the access network device. The paging message includes a temporary mobile subscriber identity (Temporary Mobile Subscriber Identity, TMSI) allocated by the core network to UE and paging configuration information (a DRX cycle length, an eDRX cycle length, a PTW length, and a tracking area (Tracking Area, TA) index list). According to conventional CN paging, because the core network device does not know an access network device on which the terminal device camps, the core network device performs paging based on a TA. In other words, the core network device needs to perform paging in a large range. However, when the terminal device in the CM_IDLE state and the RRC_INACTIVE state is in the RNA, paging performed by the core network device in a large range causes an unnecessary delay and redundant signaling. Based on the conventional RAN paging, the core network device directly transmits data to the access network device that serves the terminal device. However, the terminal device in the CM_IDLE state and the RRC_INACTIVE state does not establish a connection to the core network, and the core network device cannot directly transmit data to the access network device. In other words, a conventional communication procedure is not applicable to a terminal device in a newly introduced state (for example, the CM_IDLE and the RRC _INACTIVE state). Therefore, a new communication procedure needs to be proposed to optimize communication of the terminal device. It may be understood that embodiments of this disclosure are further applicable to another scenario or a communication process, and are not limited to the paging process.

According to embodiments of this disclosure, if the access network device determines that the RRC status of the terminal device needs to be updated, the access network device sends update information to the core network device, to trigger the core network device to update the CM status of the terminal device. Because the update information can indicate a correspondence between the access network device and the terminal device, the core network device may determine the access network device that serves the terminal device. Therefore, even if the terminal device is in the CM_IDLE state, the core network device can still determine the access network device on which the terminal device camps, to perform radio access network paging. This avoids an unnecessary delay and redundant signaling.

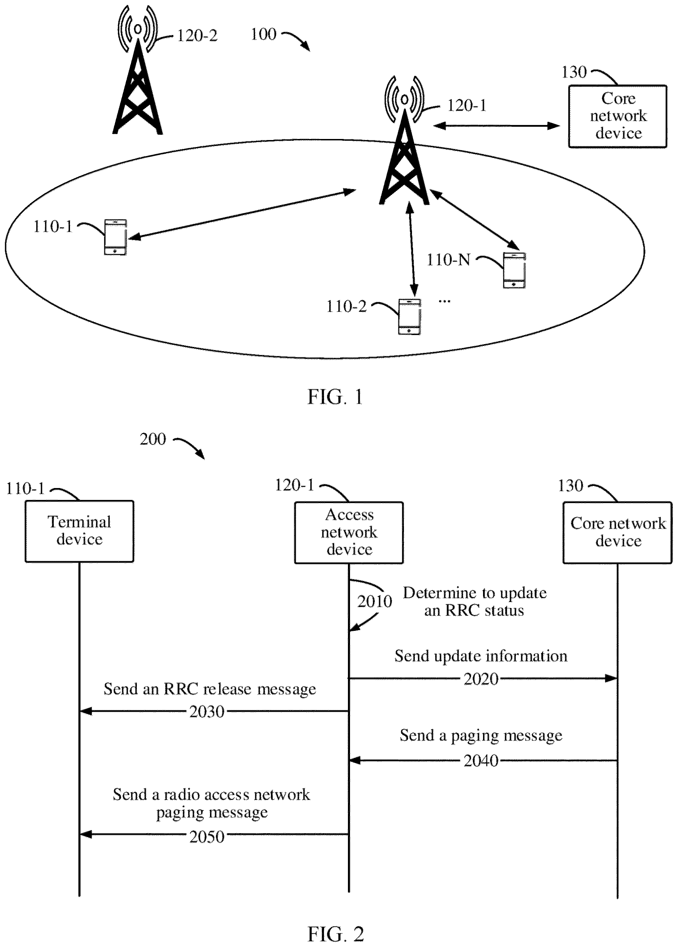

FIG. 1 is a diagram of a communication system 100 in which an embodiment of this disclosure can be implemented. The communication system 100 includes a terminal device 110-1, a terminal device 110-2, ..., and a terminal device 110-N, which may be collectively referred to as a "terminal device 110", where N is any positive integer. The communication system 100 used as a part of a communication network further includes an access network device 120-1 and an access network device 120-2. The terminal device may communicate with the access network device. The terminal device 110 may further receive a message from a core network device. The term "entity" used in this specification is a network element that can implement a specific function. As shown in FIG. 1, the terminal device 110 communicates with the access network device 120-1/the access network device 120-2 (that is, through a Uu link). The term "uplink (Uplink, UL) data" used in this specification is data sent by the terminal device to a network device. The term "downlink (Downlink, DL) data" used in this specification is data sent by the network device to the terminal device. For example only, the access network device 120-1 is a current serving access network device of the terminal device 110-1, and the access network device 120-2 is a previous serving access network device of the terminal device 110-1. The communication system 100 further includes the core network device 130, for example, an AMF. The terminal device 110 may establish a connection to the core network device 130.

The communication system 100 may include any suitable quantity of devices and cells. In the communication system 100, the terminal device 110 and the access network device may communicate data and control information with each other. It should be understood that quantities of devices shown in FIG. 1 and connections between the devices are given for a purpose of illustration, and are not limited. The communication system 100 may include any suitable quantity of devices and networks suitable for implementing embodiments of this disclosure.

Example embodiments of this disclosure are specifically discussed below with reference to the accompanying drawings. For ease of discussion, a paging procedure and signaling exchange between communication entities according to example embodiments of this disclosure are described with reference to the example communication system in FIG. 1. It should be understood that the example embodiments of this disclosure may be similarly applied to another communication system.

FIG. 2 is a diagram of a signaling exchange 200 in a communication process for paging according to some embodiments of this disclosure. The exchange 200 is described below with reference to FIG. 1. For a purpose of description, the exchange 200 relates to the terminal device 110-1, the access network device 120-1, and the core network device 130.

Step 2010: The access network device 120-1 determines (2010) to update an RRC status of the terminal device 110-1. In some embodiments, the access network device 120-1 may determine that the RRC status of the terminal device 110-1 may be updated to an RRC_INACTIVE state. For example, the access network device 120-1 may determine that the terminal device 110-1 may be updated from an RRC_CONNECTED state to the RRC_INACTIVE state. In some embodiments, if the access network device 120-1 can support an eDRX capability, the access network device 120-1 may determine to configure eDRX for the terminal device 110-1.

Step 2020: The access network device 120-1 sends (2020) update information to the core network device 130, and correspondingly the core network device 130 receives the update information from the access network device 120-1. The update information may indicate the core network device 130 to update a connection management status of the terminal device 110-1. In other words, the update information may trigger the core network device 130 to update the connection management status of the terminal device 110-1.

The update information includes an address of the access network device 120-1. Specifically, the address of the access network device 120-1 is an IP address of the access network device 120-1 or an address of a radio access network to which the access network device 120-1 belongs. For example, in this case, the update information may include an RNA code of an RNA in which the access network device 120-1 is located. In another embodiment, the address of the access network device 120-1 may include TA information associated with the access network device 120-1. It may be understood that the address of the access network device 120-1 may be any appropriate address information. In this manner, the core network device 130 knows the address of the access network device 120-1 that serves the terminal device 110-1. In a possible implementation, the update information may include identification information of the terminal device 110-1, for example, an I-RNTI. In this case, because the update information includes both the address of the access network device 120-1 and the identification information of the terminal device 110-1, the core network device 130 may determine a correspondence between the access network device 120-1 and the terminal device 110-1 based on the address of the access network device 120-1 and the identification information of the terminal device 110-1. Therefore, in a subsequent paging process, the core network device 130 may determine a serving access network device of the terminal device to be paged.

The core network device 130 may store the received address of the access network device 120-1 and the received I-RNTI of the terminal device 110-1. In this manner, the core network device obtains the address of the access network device, so that an area for paging can be reduced based on the address in the subsequent paging process.

As described above, the update information may indicate the core network device 130 to update the connection management status of the terminal device 110-1. In this case, the core network device 130 updates the connection management status of the terminal device 110-1 based on the update information. The update information may be considered as an implicit indication, to be specific, after receiving the update information, the core network device 130 is predefined or preconfigured to update a CM_CONNECTED state to a CM_IDLE state. For example, because the update information includes the I-RNTI of the terminal device, the core network device 130 may determine a TMSI of the terminal device based on the I-RNTI and a mapping relationship between the I-RNTI and the TMSI. Further, the core network device 130 may update the terminal device 110-1 from the CM_CONNECTED state to the CM_IDLE state.

Optionally, the exchange 200 further includes step 2030: The access network device 120-1 sends (2030) an RRC release message to the terminal device 110-1, and correspondingly the terminal device 110-1 receives the RRC release message from the access network device 120-1. The RRC release message includes the I-RNTI of the terminal device 110-1. The terminal device 110-1 may determine, based on the I-RNTI, whether a subsequent paging message is associated with the terminal device 110-1. The RRC release message may further include a DRX configuration. For example, the DRX configuration further includes at least one of the following: a DRX cycle or an eDRX cycle, a PTW length, RNA information, and an RNA update cycle. As described above, the access network device 120-1 may determine to configure eDRX for the terminal device 110-1. In this case, the RRC release message may indicate that the eDRX cycle is greater than a predetermined length.

In some embodiments, after receiving the RRC release message, the terminal device 110-1 may update the RRC status of the terminal device 110-1. For example, the terminal device 110-1 may be updated from the RRC_CONNECTED state to the RRC _INACTIVE state. In this case, the terminal device 110-1 may be woken up based on the paging message. In this manner, the terminal device may enter the CM_IDLE state and the RRC_INACTIVE state.

It may be understood that a sequence of sending (2020) the update information and sending (2030) the RRC release message is not limited to the sequence shown in FIG. 2, and may be any appropriate sequence. For example, the access network device 120-1 may first send the update information and then send the RRC release message. In another embodiment, the access network device 120-1 may first send the RRC release message and then send the update information.

Step 2040: The core network device 130 sends (2040) the paging message for the terminal device 110-1 to the access network device 120-1, and correspondingly the access network device 120-1 receives the paging message for the terminal device 110-1 from the core network device. The paging message may include the I-RNTI of the terminal device 110-1. The core network device 130 may determine the I-RNTI of the terminal device 110-1 based on the temporary mobile subscriber identity TMSI of the terminal device 110-1 and the stored correspondence between the I-RNTI and the TMSI. It may be understood that the core network device 130 may further store a correspondence between a TMSI and an I-RNTI of another terminal device (for example, a terminal device 110-2). The TMSI may include at least one of the following: a 5G system architecture evolution (System Architecture Evolution, SAE) temporary mobile subscriber identity (5G SAE Temporary Mobile Station Identifier, 5G-S-TMSI), a 5G-TMSI, a 5G globally unique temporary UE identity (5G Globally Unique Temporary UE Identity, 5G-GUTI), and a globally unique temporary UE identity GUTI. The 5G-S-TMSIis a shortened 5G-GUTI. For example, a format of the 5G-GUTI may be represented in the following manner: <5G-GUTI>=<GUAMI><5G-TMSI>, where <GUAMI>=<MCC><MNC><AMF Identifier>, and <AMF Identifier>=<AMF Region ID><AMF Set ID><AMF Pointer>, while a format, of the GUTI, used in an evolved packet system (Evolved Packet System, EPS) is: <GUTI>=<MCC><MNC><MME Group ID><MME Code><M-TMSI>. In this manner, the access network device 120-1 may determine, based on the stored correspondence between the I-RNTI and the TMSI, a specific terminal device for which the received paging message is used.

Step 2050: The access network device 120-1 sends (2050) a radio access network (RAN) paging message to the terminal device 110-1, and correspondingly the terminal device 110-1 receives the RAN paging message from the access network device 120-1. The radio access network paging message includes the I-RNTI of the terminal device 110-1. The terminal device 110-1 may monitor the radio access network paging message from the access network device 120-1. If the radio access network paging message detected by the terminal device 110-1 includes the I-RNTI of the terminal device 110-1, the terminal device 110-1 may determine that the paging message is for the terminal device 110-1. As described above, the terminal device 110-1 is in the RRC_INACTIVE state, and the terminal device 110-1 may be woken up based on the paging message, to receive subsequent data or signaling from the access network device 120-1, or initiate an RRC connection resume process to the access network device 120-1, to establish an RRC connection. In this manner, the terminal device starts the RRC connection resume process, and determines, based on the I-RNTI, a UE context stored in the access network device, to quickly resume the connection.

According to the embodiment shown in FIG. 2, if the access network device determines that the RRC status of the terminal device needs to be updated, the access network device sends the update information to the core network device, to trigger the core network device to update the CM status of the terminal device. Further, the core network device may further send the paging message for the terminal device to the access network device based on address information, of the access network device, that is included in the update information. In other words, the core network device clearly knows the access network device that serves the to-be-paged terminal device. Therefore, even if no CM connection is established between the core network device and the terminal device, the core network device still does not need to perform large-scale core network paging, and only needs to send the paging message to the access network device. This avoids an unnecessary delay and redundant signaling. The access network device sends the radio access network paging message to the terminal device. Therefore, the core network device reduces an area for paging based on the address of the access network device, to reduce a waste of resources. In addition, the terminal device may retrieve, based on the I-RNTI included in the paging message, the UE context stored in the access network device, to quickly resume the RRC connection. In this way, a delay caused by the RRC resume process can also be reduced, so that the access network device can provide a service for the terminal device in a timely manner, thereby improving user experience.

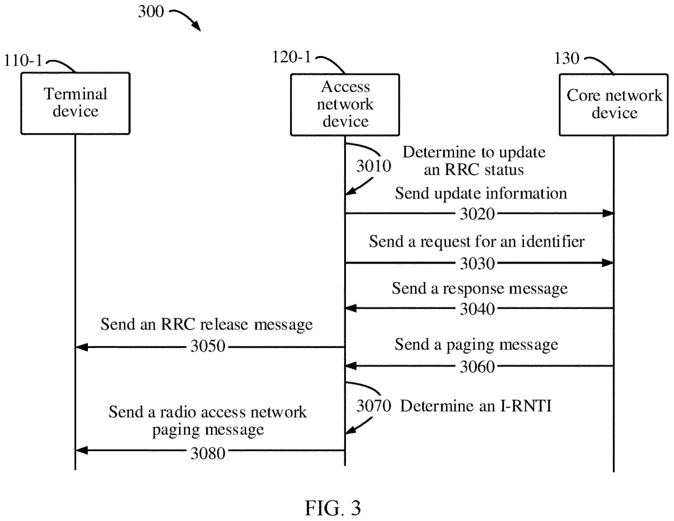

In the embodiment shown in FIG. 2, the update information from the access network device includes both the address of the access network device 120-1 and the I-RNTI of the terminal device 110-1. Optionally, in another embodiment, the update information may include the address of the access network device 120-1 but does not include the I-RNTI of the terminal device 110-1. For example, FIG. 3 is diagram of a signaling exchange 300 in a communication process for paging according to some embodiments of this disclosure. The update information does not include the I-RNTI of the terminal device 110-1. The exchange 300 is described below with reference to FIG. 1. For a purpose of description, the exchange 300 relates to the terminal device 110-1, the access network device 120-1, and the core network device 130.

Step 3010: The access network device 120-1 determines (3010) to update an RRC status of the terminal device 110-1. Step 3010 is similar to step 2010 described with reference to FIG. 2. Details are not described herein again.

Step 3020: The access network device 120-1 sends (3020) update information to the core network device 130, and correspondingly the core network device 130 receives the update information from the access network device 120-1. The update information may indicate the core network device 130 to update a connection management status of the terminal device 110-1. In other words, the update information may trigger the core network device 130 to update the connection management status of the terminal device 110-1. A specific update process is described below.

The update information includes an address of the access network device 120-1. Specifically, the address of the access network device 120-1 is an IP address of the access network device 120-1 or an address of a radio access network to which the access network device 120-1 belongs. For example, in this case, the update information may include an RNA code of an RNA in which the access network device 120-1 is located. In another embodiment, the address of the access network device 120-1 may include TA information associated with the access network device 120-1. It may be understood that the address of the access network device 120-1 may be other appropriate address information.

As described above, the update information may indicate the core network device 130 to update the connection management status of the terminal device 110-1. In this case, the core network device 130 updates the connection management status of the terminal device 110-1 based on the update information. The update information may be considered as an implicit indication, to be specific, after receiving the update information, the core network device 130 is predefined or preconfigured to update a CM_CONNECTED state to a CM_IDLE state.

Step 3030: The access network device 120-1 sends (3030) a request for an identifier of the terminal device 110-1 to the core network device 130, and correspondingly the core network 120 receives the request for the identifier of the terminal device 110-1 from the access network device 120-1. The request for the identifier of the terminal device may be a first request, and the first request is used to request the identifier of the terminal device. Specifically, the first request is used to request a TMSI of the terminal device. It may also be understood as that the first request is used to request the core network device to allocate the TMSI to the terminal device. Optionally, the request may include a context (Context) identifier of the terminal device 110-1. It may be understood that the request for the identifier of the terminal device 110-1 and the update information may be sent in a same message or different messages. The term "context" or "UE context" used in this specification includes information required by the terminal device in a communication process, for example, a user identifier, a tracking area list, and a security algorithm in the communication process.

In another embodiment, the request may include a radio access network-based notification area user equipment next generation application protocol identity (Radio Access Network Notification Area User Equipment Next Generation Application Protocol Identity, RAN UE NGAP ID). The RAN UE NGAP ID uniquely identifies the terminal device 110-1 in the access network device 120-1 through an NG interface. When the core network device 130 receives the RAN UE NGAP ID, the core network device 130 stores the ID during a logical NG connection that is of the terminal device 110-1 and that is associated with the terminal device 110-1.

In this case, because the update information includes the address of the access network device 120-1 and the request includes the identifier (for example, the context identifier or the RAN UE NGAP ID) of the terminal device 110-1, the core network device 130 may know a correspondence between the access network device 120-1 and the terminal device 110-1. Therefore, when the core network device 130 needs to page the terminal device 110-1, the core network device 130 may determine that a serving access network device of the terminal device 110-1 is the access network device 120-1. In this case, because the update information includes the address of the access network device 120-1 and the access network device 120-1 requests the identifier of the terminal device 110-1, the core network device 130 may update the terminal device 110-1 from the CM_CONNECTED state to the CM_IDLE state.

Step 3040: The core network device 130 sends (3040) a response message to the access network device 120-1, and correspondingly the access network device 120-1 receives the response message from the core network device 130. The response message includes a temporary mobile subscriber identity TMSI (for example, a 5G-S-TMSI) of the terminal device 110-1. For example, as described above, the request includes the context identifier. In this case, the response message includes the TMSI that is of the terminal device 110-1 and that corresponds to the context identifier in the request. In another embodiment, as described above, the request includes a RAN UE NGAP ID. In this case, because the core network device 130 maintains a mapping relationship of {AMF UE NGAP ID, RAN UE NGAP ID, TMSI}, the response message includes the TMSI that is of the terminal device 110-1 and that corresponds to the RAN UE NGAP ID in the request. The access network device 120-1 may store a correspondence between the TMSI and the I-RNTI of the terminal device 110-1. In another embodiment, the access network device 120-1 may further store a correspondence between a TMSI and an I-RNTI of another terminal device (for example, a terminal device 110-2).

Optionally, the exchange 300 further includes step 3050: The access network device 120-1 sends (3050) an RRC release message to the terminal device 110-1, and correspondingly the terminal device 110-1 receives the RRC release message. The RRC release message includes the I-RNTI of the terminal device 110-1. The RRC release message further includes a DRX configuration. For example, the DRX configuration may include at least one of the following: a DRX cycle or an eDRX cycle, a PTW length, RNA information, and an RNA update cycle. As described above, the access network device 120-1 may determine to configure eDRX for the terminal device 110-1. In this case, the RRC release message may indicate that the eDRX cycle is greater than a predetermined length.

In some embodiments, after receiving the RRC release message, the terminal device 110-1 may update the RRC status of the terminal device 110-1. For example, the terminal device 110-1 may be updated from an RRC_CONNECTED state to an RRC_INACTIVE state. In this case, the terminal device 110-1 may be woken up based on a paging message. In this manner, the terminal device may enter the CM_IDLE state and the RRC_INACTIVE state.

It may be understood that a sequence of sending (3020) the update information and sending (3050) the RRC release message is not limited to the sequence shown in FIG. 3, and may be any appropriate sequence. For example, the access network device 120-1 may first send the update information and then send the RRC release message. In another embodiment, the access network device 120-1 may first send the RRC release message and then send the update information.

Step 3060: The core network device 130 sends (3060) the paging message for the terminal device 110-1 to the access network device 120-1, and correspondingly the access network device 120-1 receives the paging message for the terminal device 110-1 from the core network device. The paging message may include the TMSI of the terminal device 110-1. The paging message further includes first indication information. The first indication information indicates the access network device 120-1 to page the terminal device 110-1 by using a radio access network paging message. For example, the first indication information may be indicated by designing a new paging message, for example, a new message type value.

In some embodiments, the first indication information may alternatively be a new information element (Information Element, IE) added to the paging message. For example, the paging message may include a 1-bit indication, so that an access network device that supports the function, namely, an access network device that can identify the 1-bit indication information, can understand that a received S-TMSI needs to be converted into the I-RNTI, and then perform RAN paging.

In another embodiment, the first indication information may be an implicit indication. For example, a new paging message format indicates to perform paging in a radio access network-based notification area. The access network device 120-1 may determine a type of the received paging message based on the indication information.

Optionally, the exchange 300 further includes step 3070: The access network device 120-1 may determine (3070) the I-RNTI of the terminal device 110-1 based on the correspondence between the TMSI and the I-RNTI. The correspondence may further include a correspondence between a plurality of TMSIs and a plurality of I-RNTIs. For example, the correspondence may include the correspondence between the TMSI and the I-RNTI of the terminal device 110-1 and the correspondence between the TMSI and the I-RNTI of the terminal device 110-2. In this case, the access network device 120-1 may determine, based on the correspondence, the I-RNTI corresponding to the TMSI included in the paging message.

Step 3080: The access network device 120-1 sends (3080) a radio access network (RAN) paging message to the terminal device 110-1, and correspondingly the terminal device 110-1 receives the RAN paging message from the access network device 120-1. The radio access network paging message includes the I-RNTI of the terminal device 110-1. The terminal device 110-1 may monitor the radio access network paging message from the access network device 120-1. If the radio access network paging message detected by the terminal device 110-1 includes the I-RNTI of the terminal device 110-1, the terminal device 110-1 may determine that the paging message is for the terminal device 110-1. As described above, the terminal device 110-1 is in the RRC_INACTIVE state, and the terminal device 110-1 may be woken up based on the paging message, to receive subsequent data or signaling from the access network device 120-1. In this manner, the terminal device starts an RRC connection resume process, and determines, based on the I-RNTI, a UE context stored in the access network device, to quickly resume a connection.

According to the embodiment shown in FIG. 3, if the access network device determines that the RRC status of the terminal device needs to be updated, the access network device sends the update information to the core network device, to trigger the core network device to update the CM status of the terminal device. The access network device further requests the identifier of the terminal device from the core network device. The access network device stores a correspondence between the identifier allocated by the access network device to the terminal device and an identifier allocated by the core network device to the terminal device. The core network device sends, to the access network device, the paging message including the identifier allocated by the core network device to the terminal device. The access network device determines, based on the correspondence and the received paging message, the identifier allocated by the access network device to the terminal device, and sends, to the terminal device, the paging message including the identifier allocated by the access network device to the terminal device. In other words, the core network device does not need to perform additional processing on the core network paging process, and the access network device autonomously completes switching from core network paging to radio access network paging. In addition, because the update information also includes the address of the access network device, the core network device reduces an area for paging based on the address. In addition, the terminal device may retrieve, based on the I-RNTI included in the paging message, the UE context stored in the access network device, to quickly resume the RRC connection. In this way, a delay caused by the RRC resume process can also be reduced, so that the access network device can provide a service for the terminal device in a timely manner, thereby improving user experience.

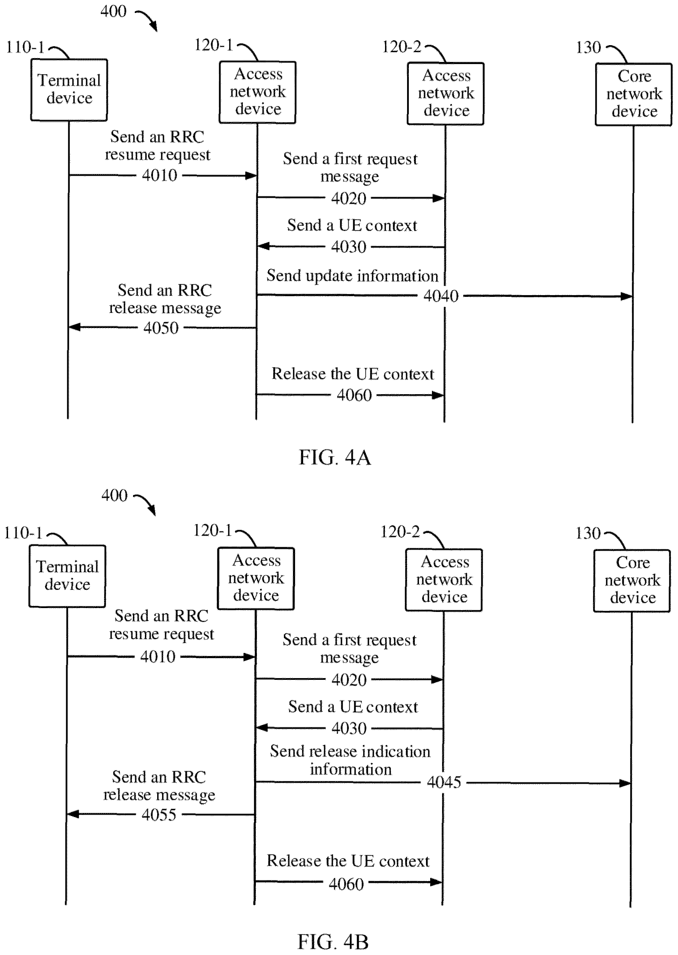

In some embodiments, the terminal device needs to perform RNAupdate when an RNA update timer expires or the terminal device detects that the RNA changes. For example, FIG. 4A is a diagram of a signaling exchange 400 in a communication process for RNA update according to some embodiments of this disclosure. The exchange 400 is described below with reference to FIG. 1. For a purpose of description, the exchange 400 relates to the terminal device 110-1, the access network device 120-1, the access network device 120-2, and the core network device 130. For example, when an RNA update timer expires or the terminal device 110-1 detects that an RNA changes, the terminal device 110-1 needs to perform RNA update. In this case, it is assumed that the access network device 120-2 is a last serving access network device.

If the access network device 120-2 supports eDRX, the terminal device 110-1 may be in a CM_IDLE state and an RRC_INACTIVE state. Step 4010: The terminal device 110-1 sends (4010) an RRC resume request to the access network device 120-1 to perform RNA update, and correspondingly the access network device 120-1 receives the RRC resume request from the terminal device 110-1. The RRC resume request may be used to switch the terminal device 110-1 from an RRC_INACTIVE state to an RRC_CONNECTED state. The RRC resume request includes an I-RNTI allocated by the access network device 120-2 to the terminal device 110-1.

Step 4020: The access network device 120-1 sends (4020) a retrieve user equipment UE context request message to the access network device 120-2, and correspondingly the access network device 120-2 receives the retrieve user equipment UE context request message from the access network device 120-1. The retrieve user equipment UE context request message is used to request a UE context of the terminal device 110-1.

Step 4030: The access network device 120-2 sends (4030) the UE context of the terminal device 110-1 to the access network device 120-1, and correspondingly the access network device 120-1 receives the UE context of the terminal device 110-1 from the access network device 120-2.

If the access network device 120-1 can support an eDRX capability, the access network device 120-1 may determine to configure eDRX for the terminal device 110-1. In this case, step 4040: The access network device 120-1 sends (4040) update information to the core network device 130, and correspondingly the core network device 130 receives the update information from the access network device 120-1. The update information may indicate the core network device 130 to update a connection management status of the terminal device 110-1.

The update information indicates an address of the access network device 120-1. Specifically, the address of the access network device 120-1 is an IP address of the access network device 120-1 or an address of a radio access network to which the access network device 120-1 belongs. For example, in this case, the update information may include an RNA code of an RNA in which the access network device 120-1 is located. The update information may further indicate an I-RNTI allocated by the access network device 120-1 to the terminal device 110-1. In some embodiments, the update information may be sent in new signaling. Optionally, the update information may be carried in a path switch request message. The core network device 130 may determine, based on the update information, that the connection management status of the terminal device 110-1 is still the CM_IDLE state. In other words, the update information may be considered as an implicit indication, to be specific, after receiving the update information, the core network device 130 is predefined or preconfigured to update a CM_CONNECTED state to the CM_IDLE state. In this manner, the access network device notifies the core network device of the update information, so that the core network device can update anchor node information for paging the UE in a timely manner.

Optionally, the exchange 400 may further include step 4050: The access network device 120-1 sends (4050) an RRC release message to the terminal device 110-1, and correspondingly the terminal device 110-1 receives the RRC release message from the access network device 120-1. The RRC release message further includes a DRX configuration. For example, the DRX configuration may include a DRX cycle, an eDRX cycle, a PTW length, RNA information, and an RNA update cycle. As described above, the access network device 120-1 may determine to configure eDRX for the terminal device 110-1. In this case, the RRC release message may indicate that the eDRX cycle is greater than a predetermined length. After receiving the RRC release message, the terminal device 110-1 may determine that a status of the terminal device 110-1 is the RRC _INACTIVE state. In this case, the terminal device 110-1 may be woken up based on a paging message. Therefore, the terminal device may still be in the CM_IDLE state and the RRC INACTIVE state.

It may be understood that a sequence of sending (4040) the update information and sending (4050) the RRC release message is not limited to the sequence shown in FIG. 4A, and may be any appropriate sequence. For example, the access network device 120-1 may first send the update information and then send the RRC release message. In another embodiment, the access network device 120-1 may first send the RRC release message and then send the update information. The access network device 120-1 releases the terminal device 110-1 to the CM_IDLE state and the RRC_INACTIVE state. In other words, the terminal device 110-1 is released to the CM_IDLE state and the RRC_INACTIVE state by using the RRC release message. Specifically, after the terminal device 110-1 receives the RRC release message, the terminal device 110-1 obtains the DRX configuration, for example, the DRX cycle, the eDRX cycle, the PTW length, the RNA information, and the RNA update cycle.

Step 4060: The access network device 120-1 notifies (4060) the access network device 120-2 to release a resource of the terminal device 110-1.

According to the embodiment shown in FIG. 4A, when the access network device that serves the terminal device changes from the access network device 120-2 to the access network device 120-1, if the access network device 120-1 and the access network device 120-2 have a similar capability (for example, both support eDRX), the access network device 120-1 notifies the core network device 130 to store information about the access network device 120-1 for subsequent paging. Therefore, the core network device can update related information in a timely manner for a subsequent process, for example, a paging process. In addition, the terminal device may still be in the CM_IDLE state and the RRC_INACTIVE state.

In the embodiment shown in FIG. 4A, both the access network device 120-1 and the access network device 120-2 support eDRX. Optionally, in another embodiment, a DRX capability supported by the access network device 120-1 may be different from a DRX capability supported by the access network device. For example, FIG. 4B is a diagram of a signaling exchange 400 in a communication process for RNA update according to some embodiments of this disclosure. The DRX capability supported by the access network device 120-1 may be different from the DRX capability supported by the access network device. The exchange 400 is described below with reference to FIG. 1. For a purpose of description, the exchange 400 relates to the terminal device 110-1, the access network device 120-1, the access network device 120-2, and the core network device 130. For example, when an RNA update timer expires or the terminal device 110-1 detects that an RNA changes, the terminal device 110-1 needs to perform RNA update. In this case, it is assumed that the access network device 120-2 is a last serving access network device.

Step 4010: The terminal device 110-1 sends (4010) an RRC resume request to the access network device 120-1 to perform RNA update, and correspondingly the access network device 120-1 receives the RRC resume request from the terminal device 110-1. Step 4020: The access network device 120-1 sends (4020) a retrieve user equipment UE context request message to the access network device 120-2. The retrieve user equipment UE context request message is used to request a context of the terminal device 110-1, and correspondingly the access network device 120-2 receives the retrieve user equipment UE context request message from the access network device 120-1. Step 4030: The access network device 120-2 sends (4030) a UE context of the terminal device 110-1 to the access network device 120-1, and correspondingly the access network device 120-1 receives the UE context of the terminal device 110-1 from the access network device 120-2. The foregoing process is similar to that described with reference to FIG. 4A. Details are not described herein again.

In some embodiments, the access network device 120-1 cannot support an eDRX capability. Alternatively, even if the access network device 120-1 can support the eDRX capability, the access network device 120-1 determines not to configure eDRX for the terminal device 110-1. In this case, step 4045: The access network device 120-1 sends (4045) release indication information to the core network device 130. The release indication information may indicate to delete an address of the access network device 120-2. Specifically, the address of the access network device 120-2 may include an IP address of the access network device 120-2 or an address of a radio access network to which the access network device 120-1 belongs. For example, in this case, the release indication information may include an RNA code of an RNA in which the access network device 120-1 is located. The release indication information may further indicate an I-RNTI allocated by the access network device 120-2 to the terminal device 110-1 or a TMSI allocated by the core network device 130 to the terminal device 110-1. Optionally, the release indication information may further include an address of a second network device and/or an index value corresponding to a first identifier. For example, each set of {address of the second network device, first identifier} stored in the access network device 120-2 and the core network device 130 has a first index value. In this case, the release indication information may include a corresponding index value. Therefore, the core network device 130 may delete {address of the second network device, first identifier} associated with the index value. The core network device 130 may determine that a connection management status of the terminal device 110-1 is updated from a CM_IDLE state to a CM_CONNECTED state. The release indication information may further indicate that the access network device 120-1 does not support eDRX, or the access network device 120-1 does not configure eDRX. In other words, the release indication information may be considered as an implicit indication, to be specific, after receiving the release indication information, the core network device 130 is predefined or preconfigured to update the CM_IDLE state to the CM_CONNECTED state. For example, because the release indication information indicates identification information (for example, the I-RNTI, the TMSI, or the index value) of the terminal device, the core network device 130 may determine the terminal device 110-1 based on the identification information. Further, the core network device 130 may change the terminal device 110-1 from the CM_IDLE state to the CM_CONNECTED state. In this manner, the access network device 120-1 notifies the core network device of information that needs to be deleted, to delete invalid information in a timely manner, and release storage space.

Optionally, the exchange 400 further includes step 4055: The access network device 120-1 sends (4055) an RRC release message to the terminal device 110-1, and correspondingly the terminal device 110-1 receives the RRC release message from the access network device 120-1. The RRC release message further includes a DRX configuration. For example, the DRX configuration may include a DRX cycle, an eDRX cycle, a PTW length, RNA information, and an RNA update cycle. As described above, the access network device 120-1 may determine not to configure eDRX for the terminal device 110-1. In this case, the RRC release message may indicate that the DRX cycle is less than a predetermined length. After receiving the RRC release message, the terminal device 110-1 may determine that a status of the terminal device 110-1 is the RRC_INACTIVE state. In this case, the terminal device 110-1 may be woken up based on a paging message. In this manner, the terminal device may be updated to the CM_CONNECTED state and the RRC_INACTIVE state.

It may be understood that a sequence of sending (4045) the release indication information and sending (4055) the RRC release message is not limited to the sequence shown in FIG. 4B, and may be any appropriate sequence. For example, the access network device 120-1 may first send the release indication information, and then send the RRC release message. In another embodiment, the access network device 120-1 may first send the RRC release message and then send the release indication information. The access network device 120-1 releases the terminal device 110-1 to the CM_CONNECTED state and the RRC_INACTIVE state. In other words, the terminal device 110-1 is released to the CM_CONNECTED state and the RRC_INACTIVE state by using the RRC release message. Specifically, after the terminal device 110-1 receives the RRC release message, the terminal device 110-1 obtains the DRX configuration, for example, the DRX cycle, the eDRX cycle, the PTW length, the RNA information, and the RNA update cycle.

Step 4060: The access network device 120-1 notifies (4060) the access network device 120-2 to release a resource of the terminal device 110-1.

According to the embodiment shown in FIG. 4B, when a serving access network device of the terminal device changes from the access network device 120-2 to the access network device 120-1, if a capability of the access network device 120-1 is different from that of the access network device 120-2 (where for example, the access network device 120-2 supports eDRX but the access network device 120-1 does not support eDRX), the access network device 120-1 notifies the core network device 130 to delete previous information about the access network device 120-2 for subsequent paging. In this manner, the access network device 120-1 notifies the core network device of information that needs to be deleted, to delete invalid information in a timely manner, and release storage space.

It may be understood that the foregoing embodiments described with reference to FIG. 2 to FIG. 4B may be implemented in any combination manner, or may be implemented independently. This embodiment of this disclosure is not limited in this respect.

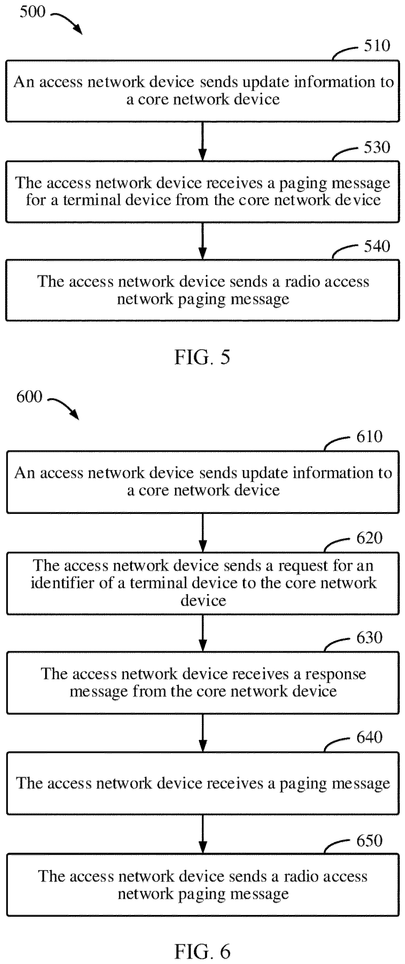

FIG. 5 is a schematic flowchart of an example of a communication method 500. The method 500 is implemented at an access network device, for example, an access network device 120-1.

In some embodiments, the access network device 120-1 may determine to update an RRC status of a terminal device 110-1. For example, the access network device 120-1 may determine that the RRC status of the terminal device 110-1 may be updated to an RRC_INACTIVE state. In some embodiments, if the access network device 120-1 can support an eDRX capability, the access network device 120-1 may determine to configure eDRX for the terminal device 110-1.

At a block 510, the access network device 120-1 sends update information to a core network device 130. The update information includes an address of the access network device 120-1. The update information may indicate the core network device 130 to update a connection management status of the terminal device 110-1. Content included in the update information is similar to that included in the sent (2020) update information described with reference to FIG. 2. Details are not described herein again.

In some embodiments, the access network device 120-1 sends an RRC release message to the terminal device 110-1. The RRC release message includes an I-RNTI of the terminal device 110-1. Content included in the RRC release message is similar to the RRC release message described with reference to FIG. 2. Details are not described herein again.

It may be understood that a sequence of sending the update information and sending the RRC release message is not limited to the sequence shown in FIG. 5, and may be any appropriate sequence. For example, the access network device 120-1 may first send the update information and then send the RRC release message. In another embodiment, the access network device 120-1 may first send the RRC release message and then send the update information.

At a block 530, the access network device 120-1 receives, from the core network device, a paging message corresponding to the terminal device 110-1. The paging message may include the I-RNTI of the terminal device 110-1. Content included in the paging message is similar to the paging message described with reference to FIG. 2. Details are not described herein again.

At a block 540, the access network device 120-1 sends a radio access network paging message to the terminal device 110-1. The radio access network paging message includes the I-RNTI of the terminal device 110-1. Content included in the radio access network paging message is similar to the radio access network paging message described with reference to FIG. 2. Details are not described herein again.

FIG. 6 is a schematic flowchart of an example of a communication method 600. The method 600 is implemented at an access network device, for example, an access network device 120-1.

In some embodiments, the access network device 120-1 determines to update an RRC status of a terminal device 110-1. For example, the access network device 120-1 may determine that the RRC status of the terminal device 110-1 may be updated to an RRC_INACTIVE state. In some embodiments, if the access network device 120-1 can support an eDRX capability, the access network device 120-1 may determine to configure eDRX for the terminal device 110-1.

At a block 610, the access network device 120-1 sends update information to a core network device 130. The update information includes an address of the access network device 120-1. Content included in the update information is similar to that included in the sent (3020) update information described with reference to FIG. 3. Details are not described herein again. The update information may indicate the core network device 130 to update a connection management status of the terminal device 110-1.

At a block 620, the access network device 120-1 sends a request for an identifier of the terminal device 110-1 to the core network device 130. For example, the request may include an identifier of a context of the terminal device 110-1. Content included in the request is similar to that included in the sent (3030) request described with reference to FIG. 3. Details are not described herein again.

At a block 630, the access network device 120-1 receives a response message from the core network device 130. The response message includes a temporary mobile subscriber identity TMSI (for example, a 5G-S-TMSI) of the terminal device 110-1. In this case, the access network device 120-1 may store a mapping relationship between the TMSI and an I-RNTI of the terminal device 110-1. The response message is similar to the response message described with reference to FIG. 3. Details are not described herein again.

In some embodiments, the access network device 120-1 sends an RRC release message to the terminal device 110-1. The RRC release message includes the I-RNTI of the terminal device 110-1. Content included in the RRC release message is similar to the RRC release message described with reference to FIG. 3. Details are not described herein again. It may be understood that a sequence of sending the update information and sending the RRC release message is not limited to the sequence shown in FIG. 3, and may be any appropriate sequence. For example, the access network device 120-1 may first send the update information and then send the RRC release message. In another embodiment, the access network device 120-1 may first send the RRC release message and then send the update information.

At a block 640, the access network device 120-1 receives, from the core network device 130, a paging message corresponding to the terminal device 110-1. The paging message is similar to the paging message described with reference to FIG. 3. Details are not described herein again.

At a block 650, the access network device 120-1 sends a radio access network paging message to the terminal device 110-1. The radio access network paging message includes the I-RNTI of the terminal device 110-1. The access network device 120-1 may determine the I-RNTI of the terminal device 110-1 based on a correspondence between the TMSI and the I-RNTI. The radio access network paging message is similar to the radio access network paging message described with reference to FIG. 3. Details are not described herein again.

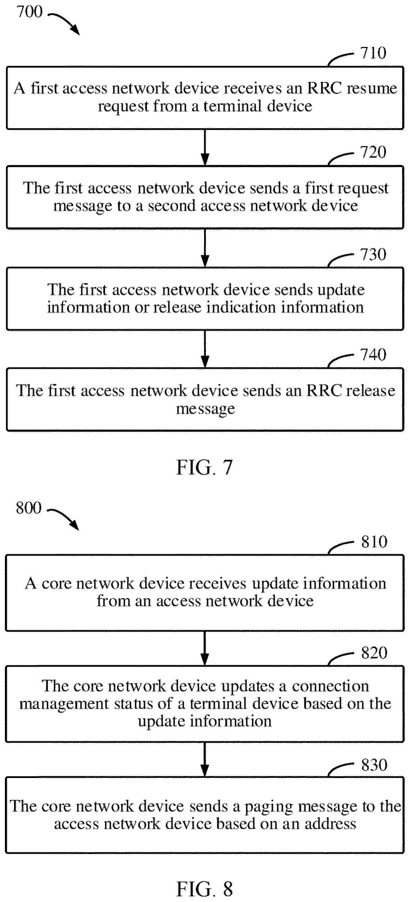

FIG. 7 is a schematic flowchart of an example of a communication method 700. The method 700 is implemented at an access network device, for example, an access network device 120-1.

At a block 710, the access network device 120-1 receives an RRC resume request from a terminal device 110-1 to perform RNA update. The RRC resume request includes an I-RNTI allocated by an access network device 120-2 to the terminal device 110-1. The RRC resume request is similar to the RRC resume request described with reference to FIG. 4A or FIG. 4B. Details are not described herein again.

At a block 720, the access network device 120-1 sends a retrieve user equipment UE context request message to the access network device 120-2. The retrieve user equipment UE context request message is used to request a UE context of the terminal device 110-1. The access network device 120-1 receives the UE context from the access network device 120-2. The UE context request is similar to the UE context request described with reference to FIG. 4A or FIG. 4B. Details are not described herein again.

At a block 730, the access network device 120-1 sends update information or release indication information to the core network device 130. The update information or the release indication information is similar to the RRC update information or the release indication information described with reference to FIG. 4A or FIG. 4B. Details are not described herein again.

At a block 740, the access network device 120-1 sends an RRC release message to the terminal device 110-1. The RRC release message is similar to the RRC release message described with reference to FIG. 4A or FIG. 4B. Details are not described herein again.

FIG. 8 is a schematic flowchart of an example of a communication method 800. The method 800 is implemented at a core network device, for example, a core network device 130.

At a block 810, an access network device 120-1 sends update information to the core network device 130. Optionally, content included in the update information is similar to that included in the sent (2020) update information described with reference to FIG. 2. Details are not described herein again. In another embodiment, content included in the update information is similar to that included in the sent (3020) update information described with reference to FIG. 3. Details are not described herein again.

At a block 820, the core network device 130 updates a connection management status of a terminal device 110-1 based on the update information. For example, the core network device 130 may update the connection management status of the terminal device 110-1 to a CM_IDLE state.

In some embodiments, the core network device 130 receives, from the access network device 120-1, a request for an identifier of the terminal device 110-1. The request is similar to the request, for the identifier of the terminal device 110-1, that is described with reference to FIG. 3. Details are not described herein again.

At a block 830, the core network device 130 sends a paging message for the terminal device 110-1 to the access network device 120-1. The paging message is similar to the paging message described with reference to FIG. 2 or FIG. 3. Details are not described herein again.

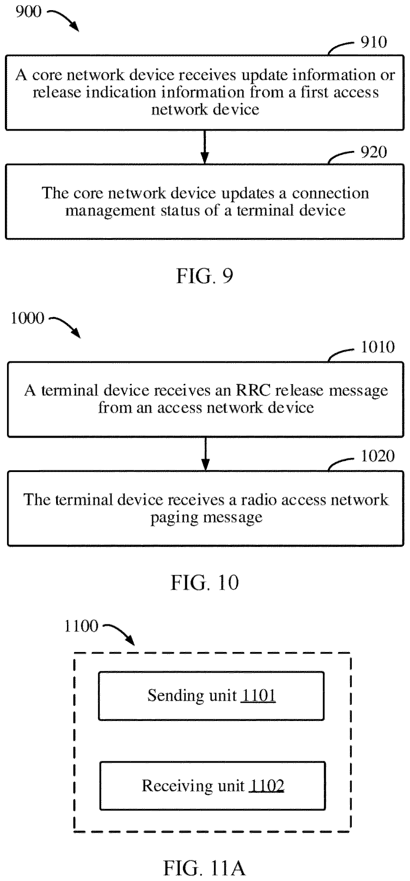

FIG. 9 is a schematic flowchart of an example of a communication method 900. The method 900 is implemented at a core network device, for example, a core network device 130.

At a block 910, the core network device 130 receives update information or release indication information from an access network device 120-1. The update information or the release indication information is similar to the RRC update information or the release indication information described with reference to FIG. 4A and FIG. 4B. Details are not described herein again.

At a block 920, the core network device 130 updates a connection management status of a terminal device 110-1. For example, if the core network device 130 receives the update information, the core network device 130 updates an address of the access network device and an I-RNTI of the terminal device based on the update information. Optionally, if the core network device 130 receives the release indication information, the core network device 130 may delete the address of the access network device 120-2. The core network device 130 may further delete the I-RNTI of the terminal device.

FIG. 10 is a schematic flowchart of an example of a communication method 1000. The method 1000 is implemented at a terminal device, for example, a terminal device 110-1.

At a block 1010, the terminal device 110-1 receives an RRC release message from an access network device 120-1. The RRC release message is similar to the RRC release message described with reference to FIG. 2 and FIG. 3. Details are not described herein again.

At a block 1020, the terminal device 110-1 receives a radio access network paging message. The radio access network paging message includes an I-RNTI of the terminal device 110-1. The paging message is similar to the paging message described with reference to FIG. 2 and FIG. 3. Details are not described herein again.

FIG. 11A to FIG. 11F are block diagrams of communication apparatuses according to some embodiments of this disclosure. The communication apparatus may be implemented as a device or a chip in the device, and the scope of this disclosure is not limited in this aspect.

As shown in FIG. 11A, the device 1100 includes a sending unit 1101 and a receiving unit 1102. The sending unit 1101 is configured to send update information to a core network device, where the update information includes an address of an access network device and an inactive radio network temporary identifier I-RNTI of a terminal device. The receiving unit 1102 is configured to receive a paging message corresponding to the terminal device from the core network device. The sending unit 1101 is further configured to send a radio access network paging message to the terminal device, where the radio access network paging message includes the I-RNTI. It may be understood that the device 1100 may further include another unit configured to implement the method shown in FIG. 5, for example, a processing unit.

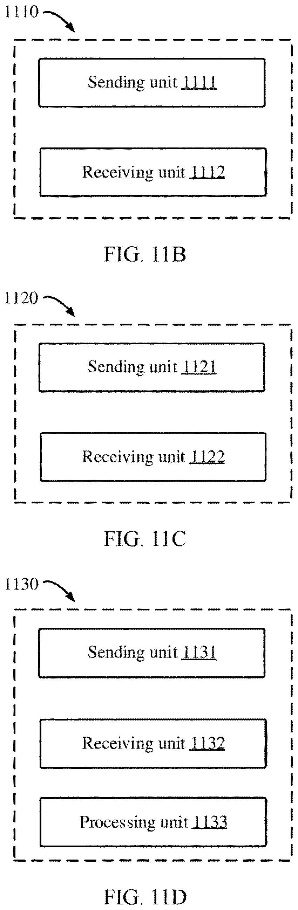

As shown in FIG. 11B, the device 1110 includes a sending unit 1111 and a receiving unit 1112. The sending unit 1111 is configured to send update information to a core network device, where the update information includes an address of an access network device. The sending unit 1111 is further configured to send a request for an identifier of a terminal device to the core network device. The receiving unit 1112 is configured to receive a response message from the core network device, where the response message includes a temporary mobile subscriber identity TMSI of the terminal device. The receiving unit 1112 is further configured to receive a paging message corresponding to the terminal device from the core network device, where the paging message includes the TMSI. The sending unit 1111 is further configured to send a radio access network paging message, where the radio access network paging message includes an inactive radio network temporary identifier I-RNTI of the terminal device. It may be understood that the device 1110 may further include another unit configured to implement the method shown in FIG. 6, for example, a processing unit.

As shown in FIG. 11C, the device 1120 includes a sending unit 1121 and a receiving unit 1122. The receiving unit 1122 is configured to receive a radio resource control resume request from a terminal device, where the radio resource control resume request includes a first identifier allocated by a second network device to the terminal device. The sending unit 1121 is configured to send a retrieve user equipment UE context request message to a second access network device, where the retrieve user equipment UE context request message is used to request a context of the terminal device. The sending unit 1121 is further configured to send update information or release indication information to a core network device, where the update information indicates at least one of the following: an address of a first access network device or a second identifier allocated by the first access network device to the terminal device; and the release indication information indicates to release at least one of the following: an address of the second network device or the first identifier. The sending unit 1121 is further configured to send a radio resource control release message to the terminal device, where the radio resource control release message includes the second identifier. It may be understood that the device 1120 may further include another unit configured to implement the method shown in FIG. 7, for example, a processing unit.

As shown in FIG. 11D, the device 1130 includes a sending unit 1131, a receiving unit 1132, and a processing unit 1133. The receiving unit 1132 is configured to receive update information from an access network device, where the update information includes at least an address of the access network device. The processing unit 1133 is configured to update a connection management status of a terminal device based on the update information. The sending unit 1131 is configured to send a paging message corresponding to the terminal device to the access network device based on the address. It may be understood that the device 1130 may further include another unit configured to implement the method shown in FIG. 8.

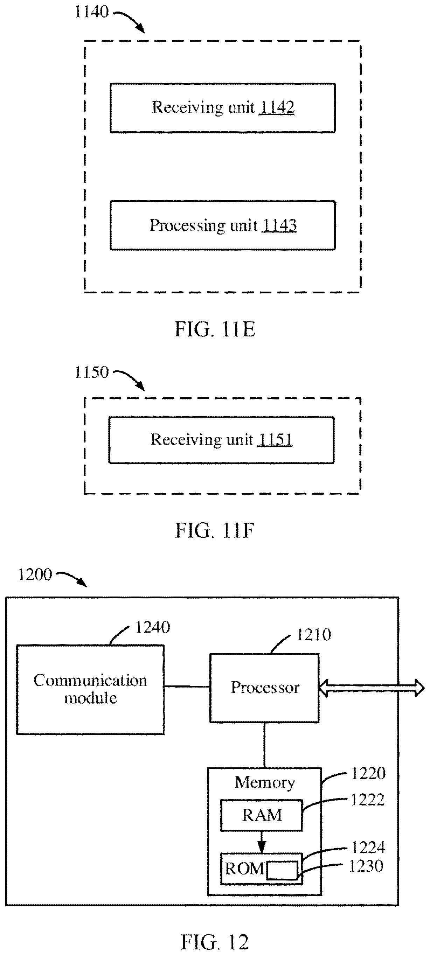

As shown in FIG. 11E, the device 1140 includes a receiving unit 1142 and a processing unit 1143. The receiving unit 1142 is configured to receive update information or release indication information from a first access network device, where the update information indicates at least one of the following: an address of the first access network device or a second identifier allocated by the first access network device to a terminal device; and the release indication information indicates to release at least one of the following: an address of a second network device or a first identifier allocated by a second access network device to the terminal device. The processing unit 1143 is configured to update a connection management status of the terminal device based on the update information or the release indication information. It may be understood that the device 1140 may further include another unit configured to implement the method shown in FIG. 9.

As shown in FIG. 11F, the device 1150 includes a receiving unit 1151. The receiving unit 1151 is configured to receive a radio resource control release message from an access network device, where the radio resource control release message includes an I-RNTI of a terminal device and a discontinuous reception configuration, and a discontinuous reception cycle is greater than a predetermined length. A radio resource control status between the terminal device and the access network device is a radio resource control inactive state. A connection management status between the terminal device and a core network device is a connection management idle state. The receiving unit 1151 is further configured to receive a radio access network paging message, where the radio access network paging message includes the I-RNTI. It may be understood that the device 1150 may further include another unit configured to implement the method shown in FIG. 10, for example, a processing unit.

FIG. 12 is a simplified block diagram of an example device 1200 suitable for implementing an embodiment of this disclosure. The device 1200 may be configured to implement the terminal device, the access network device, or the core network device shown in FIG. 1. As shown in the figure, the device 1200 includes one or more processors 1210, one or more memories 1220 coupled to the processors 1210, and a communication module 1240 coupled to the processor 1210.

The communication module 1240 may be configured to perform bidirectional communication. The communication module 1240 may have at least one communication interface for communication. The communication interface may include any interface necessary for communicating with another device.

The processor 1210 may be of any type suitable for a local technology network, and may include but is not limited to at least one of the following: a general-purpose computer, a dedicated computer, a microcontroller, a digital signal processor (Digital Signal Processor, DSP), or a controller-based multi-core controller architecture. The device 1200 may have a plurality of processors, for example, application-specific integrated circuit chips, which belong to a clock synchronized with a main processor in time.

The memory 1220 may include one or more nonvolatile memories and one or more volatile memories. For example, the nonvolatile memory includes but is not limited to at least one of the following: a read-only memory (Read-Only Memory, ROM) 1224, an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. Examples of the volatile memory include but are not limited to at least one of the following: a random access memory (Random Access Memory, RAM) 1222, or another volatile memory that does not last for power-off duration.

A computer program 1230 includes computer-executable instructions executed by the associated processor 1210. The program 1230 may be stored in the ROM 1220. The processor 1210 may perform any suitable actions and processing by loading the program 1230 into the RAM 1220.

Embodiments of this disclosure may be implemented by using the program 1230, so that the device 1200 may perform any process discussed with reference to FIG. 2 to FIG. 10. Embodiments of this disclosure may alternatively be implemented by using hardware or a combination of software and hardware.

In some embodiments, the program 1230 may be tangibly included in a computer-readable medium, and the computer-readable medium may be included in the device 1200 (for example, in the memory 1220) or another storage device that can be accessed by the device 1200. The program 1230 may be loaded from the computer-readable medium into the RAM 1222 for execution. The computer-readable medium may include any type of tangible nonvolatile memory, for example, a ROM, an EPROM, a flash memory, a hard disk, a CD, or a DVD.

Usually, various embodiments of this disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, such as instructions included in a program module, which are executed in a device on a target real or virtual processor to perform the processes/method as described above with reference to FIG. 2 to FIG. 10. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions used for the program module may be executed locally or in a distributed device. In the distributed device, the program module may be locally located and located in a remote storage medium.

Computer program code used for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this disclosure, the computer program code or related data may be carried in any appropriate carrier, so that the device, the apparatus, or the processor can perform various processing and operations described above. Examples of the carrier include a signal, a computer-readable medium, and the like. Examples of the signal may include propagated signals in electrical, optical, radio, sound, or other forms, such as carrier waves and infrared signals.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this disclosure are described in a particular order in the accompanying drawings, it does not indicate or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

## Claims

1. A communication method, wherein the method comprises:
sending, by an access network device, update information to a core network device, wherein the update information comprises an address of the access network device and an inactive radio network temporary identifier I-RNTI of a terminal device;
receiving, by the access network device, a paging message corresponding to the terminal device from the core network device; and
sending, by the access network device, a radio access network paging message to the terminal device, wherein the radio access network paging message comprises the I-RNTI.

2. The method according to claim 1, wherein the paging message corresponding to the terminal device comprises the I-RNTI.

3. The method according to claim 1 or 2, wherein the update information indicates the core network device to update a connection management status of the terminal device.

4. The method according to any one of claims 1 to 3, wherein the method further comprises:
sending, by the access network device, a radio resource control release message to the terminal device, wherein the radio resource control release message comprises the I-RNTI.

5. The method according to claim 4, wherein the radio resource control release message further comprises discontinuous reception configuration information, and a discontinuous reception cycle is greater than a predetermined length.

6. The method according to any one of claims 1 to 5, wherein the address of the access network device is an IP address of the access network device or an address of a radio access network to which the access network device belongs.

7. A communication method, wherein the method comprises:
sending, by an access network device, update information to a core network device, wherein the update information comprises an address of the access network device;
sending, by the access network device, a request for an identifier of a terminal device to the core network device;
receiving, by the access network device, a response message from the core network device, wherein the response message comprises a temporary mobile subscriber identity TMSI of the terminal device;
receiving, by the access network device, a paging message corresponding to the terminal device from the core network device, wherein the paging message comprises the TMSI; and
sending, by the access network device, a radio access network paging message, wherein the radio access network paging message comprises an inactive radio network temporary identifier I-RNTI of the terminal device.

8. The method according to claim 7, wherein the method further comprises:
determining, by the access network device, the I-RNTI based on a first correspondence between the TMSI and the I-RNTI.

9. The method according to claim 7 or 8, wherein the paging message corresponding to the terminal device further comprises first indication information, and the first indication information indicates the access network device to page the terminal device by using the radio access network paging message.

10. The method according to claim 8 or 9, wherein the method further comprises:
storing, by the access network device, the first correspondence.

11. The method according to any one of claims 7 to 10, wherein the update information indicates the core network device to update a connection management status of the terminal device.

12. The method according to any one of claims 7 to 11, wherein the method further comprises:
sending, by the access network device, a radio resource control release message to the terminal device, wherein the radio resource control release message comprises the I-RNTI and discontinuous reception configuration information, and a discontinuous reception cycle is greater than a predetermined length.

13. The method according to any one of claims 7 to 12, wherein the address of the access network device is an IP address of the access network device or an address of a radio access network to which the access network device belongs.

14. A communication method, wherein the method comprises:
receiving, by a first access network device, a radio resource control resume request from a terminal device, wherein the radio resource control resume request comprises a first identifier allocated by a second network device to the terminal device;
sending, by the first access network device, a retrieve user equipment UE context request message to a second access network device, wherein the retrieve UE context request message is used to request context information of the terminal device;
sending, by the access network device, update information or release indication information to a core network device, wherein the update information indicates at least one of the following:
an address of the first access network device or a second identifier allocated by the first access network device to the terminal device, and the release indication information indicates to release an address of the second network device, a temporary mobile subscriber identity of the terminal device, or the first identifier, or indicates to release an address of the second network device and an index value corresponding to the first identifier; and
sending, by the first access network device, a radio resource control release message to the terminal device, wherein the radio resource control release message comprises the second identifier.

15. The method according to claim 14, wherein if the first access network device sends the update information to the core network device, the radio resource control release message comprises discontinuous reception configuration information, and the discontinuous reception configuration information is used to configure a discontinuous reception cycle to be greater than a predetermined length.

16. The method according to claim 14 or 15, wherein the update information is carried in a path switch request.

17. The method according to any one of claims 14 to 16, wherein the first identifier and the second identifier are inactive radio network temporary identifiers I-RNTIs.

18. A communication method, wherein the method comprises:
receiving, by a core network device, update information from an access network device, wherein the update information comprises at least an address of the access network device;
updating, by the core network device, a connection management status of a terminal device based on the update information; and
sending, by the core network device, a paging message corresponding to the terminal device to the access network device based on the address.

19. The method according to claim 18, wherein the update information further comprises an inactive radio network temporary identifier I-RNTI of the terminal device, and
the paging message for the terminal device comprises the I-RNTI.

20. The method according to claim 18, wherein the method further comprises:
receiving, by the core network device, a retrieve user equipment UE context request message from the access network device, wherein the retrieve UE context request message is used to request context information of the terminal device; and
sending, by the core network device, the paging message for the terminal device to the access network device, wherein a paging message comprises a TMSI, and the paging message for the terminal device comprises a temporary mobile subscriber identity TMSI of the terminal device and indication information indicating to perform paging in a radio access network-based notification area.

21. The method according to any one of claims 18 to 20, wherein the address of the access network device is an IP address of the access network device or an address of a radio access network to which the access network device belongs.

22. A communication apparatus, wherein the communication apparatus comprises:
a sending unit, configured to send update information to a core network device, wherein the update information comprises an address of an access network device and an inactive radio network temporary identifier I-RNTI of a terminal device; and
a receiving unit, configured to receive a paging message corresponding to the terminal device from the core network device, wherein
the sending unit is further configured to send a radio access network paging message to the terminal device, wherein the radio access network paging message comprises the I-RNTI.

23. The apparatus according to claim 22, wherein the paging message corresponding to the terminal device comprises the I-RNTI.

24. The apparatus according to claim 22 or 23, wherein the update information indicates the core network device to update a connection management status of the terminal device.

25. The apparatus according to any one of claims 22 to 24, wherein the sending unit is further configured to:
send a radio resource control release message to the terminal device, wherein the radio resource control release message comprises the I-RNTI.

26. The apparatus according to claim 25, wherein the radio resource control release message further comprises discontinuous reception configuration information, and a discontinuous reception cycle is greater than a predetermined length.

27. The apparatus according to any one of claims 22 to 26, wherein the address of the access network device is an IP address of the access network device or an address of a radio access network to which the access network device belongs.

28. A communication apparatus, wherein the communication apparatus comprises:
a sending unit, configured to send update information to a core network device, wherein the update information comprises an address of an access network device, wherein
the sending unit is further configured to send a request for an identifier of a terminal device to the core network device; and
a receiving unit, configured to receive a response message from the core network device, wherein the response message comprises a temporary mobile subscriber identity TMSI of the terminal device, wherein
the receiving unit is further configured to receive a paging message corresponding to the terminal device from the core network device, wherein the paging message comprises the TMSI; and
the sending unit is further configured to send a radio access network paging message, wherein the radio access network paging message comprises an inactive radio network temporary identifier I-RNTI of the terminal device.

29. The apparatus according to claim 28, wherein the apparatus further comprises:
a unit, configured to determine the I-RNTI based on a first correspondence between the TMSI and the I-RNTI.

30. The apparatus according to claim 28 or 29, wherein the paging message corresponding to the terminal device further comprises first indication information, and the first indication information indicates the access network device to page the terminal device by using the radio access network paging message.

31. The apparatus according to claim 29 or 30, wherein the apparatus further comprises:
a unit, configured to store the first correspondence.

32. The apparatus according to any one of claims 28 to 31, wherein the update information indicates the core network device to update a connection management status of the terminal device.

33. The apparatus according to any one of claims 28 to 32, wherein the sending unit is further configured to:
send a radio resource control release message to the terminal device, wherein the radio resource control release message comprises the I-RNTI and discontinuous reception configuration information, and a discontinuous reception cycle is greater than a predetermined length.

34. The apparatus according to any one of claims 28 to 33, wherein the address of the access network device is an IP address of the access network device or an address of a radio access network to which the access network device belongs.

35. A communication apparatus, wherein the communication apparatus comprises:
a receiving unit, configured to receive a radio resource control resume request from a terminal device, wherein the radio resource control resume request comprises a first identifier allocated by a second network device to the terminal device; and
a sending unit, configured to send a retrieve user equipment UE context request message to a second access network device, wherein the retrieve UE context request message is used to request context information of the terminal device, wherein
the sending unit is further configured to send update information or release indication information to a core network device, wherein the update information indicates at least one of the following: an address of a first access network device or a second identifier allocated by the first access network device to the terminal device, and the release indication information indicates to release an address of the second network device, a temporary mobile subscriber identity of the terminal device, or the first identifier, or indicates to release an address of the second network device and an index value corresponding to the first identifier; and
the sending unit is further configured to send a radio resource control release message to the terminal device, wherein the radio resource control release message comprises the second identifier.

36. The apparatus according to claim 35, wherein if the sending unit sends the update information to the core network device, the radio resource control release message comprises discontinuous reception configuration information, and the discontinuous reception configuration information is used to configure a discontinuous reception cycle to be greater than a predetermined length.

37. The apparatus according to claim 35 or 36, wherein the update information is carried in a path switch request.

38. The apparatus according to any one of claims 35 to 37, wherein the first identifier and the second identifier are inactive radio network temporary identifiers I-RNTIs.

39. A communication apparatus, wherein the communication apparatus comprises:
a receiving unit, configured to receive update information from an access network device, wherein the update information comprises at least an address of the access network device;
a processing unit, configured to update a connection management status of a terminal device based on the update information; and
a sending unit, configured to send a paging message corresponding to the terminal device to the access network device based on the address.

40. The apparatus according to claim 39, wherein the update information further comprises an inactive radio network temporary identifier I-RNTI of the terminal device, and
the paging message for the terminal device comprises the I-RNTI.

41. The apparatus according to claim 39, wherein
the receiving unit is further configured to receive a retrieve user equipment UE context request message from the access network device, wherein the retrieve UE context request message is used to request context information of the terminal device; and
the sending unit is further configured to send the paging message for the terminal device to the access network device, wherein a paging message comprises a TMSI, and the paging message for the terminal device comprises a temporary mobile subscriber identity TMSI of the terminal device and indication information indicating to perform paging in a radio access network-based notification area.

42. The apparatus according to any one of claims 39 to 41, wherein the address of the access network device is an IP address of the access network device or an address of a radio access network to which the access network device belongs.

43. A computer-readable storage medium, wherein the computer-readable storage medium stores a computer program; and when the computer program is executed by a processor, the operations in the method according to any one of claims 1 to 6, any one of claims 7 to 13, or any one of claims 14 to 17 are implemented.

44. A computer-readable storage medium, wherein the computer-readable storage medium stores a computer program; and when the computer program is executed by a processor, the operations in the method according to any one of claims 18 to 21 are implemented.
